# FASCICULE DE BREVET EUROPEEN

(11) **EP 4 225 640 B1**
(45) Date de publication et mention de la délivrance du brevet: **30.04.2025**
(21) Numéro de dépôt: 21787438.7
(22) Date de dépôt: 06.10.2021
(51) Int. Cl.: B64C 25/44, B60T 13/74, B60T 13/66, B60T 8/32

(54) **ARCHITECTURE DE FREINAGE DISTRIBUEE A SURETE AMELIOREE**
VERTEILTE BREMSARCHITEKTUR MIT VERBESSERTER SICHERHEIT
DISTRIBUTED BRAKING ARCHITECTURE WITH IMPROVED SAFETY

(30) Priorité: 08.10.2020 FR 2010313
(43) Date de publication de la demande: 16.08.2023
(73) Titulaire: Safran Landing Systems, 78140 Vélizy-Villacoublay (FR)
(72) Inventeur: FREY, Olivier, 77550 MOISSY-CRAMAYEL (FR); ONFROY, Dominique, 77550 MOISSY-CRAMAYEL (FR)
(74) Mandataire: Cabinet Boettcher
(86) Numéro de dépôt international: PCT/EP2021/077596
(87) Numéro de publication internationale: WO 2022/074063

(56) Documents cités:
- EP-A1- 3 483 063
- EP-A1- 3 632 795
- EP-A2- 3 476 677
- FR-A1- 3 044 296

## Description

La présente invention concerne le domaine des architectures de système de freinage pour aéronefs et plus particulièrement de la sécurisation des architectures de système de freinage dites « distribuées ».

### ARRIERE PLAN DE L'INVENTION

Il est connu des architectures de système de freinage pour aéronefs comprenant un frein destiné à freiner une roue de l'aéronef. Le frein comporte des organes de friction et au moins un actionneur électromécanique pour appliquer un effort de freinage sur les organes de friction et exercer ainsi un couple de freinage sur la roue. Dans une architecture de système de freinage centralisée, l'actionneur électromécanique de freinage est relié par une ligne de puissance à un calculateur centralisé qui comprend des moyens de génération d'un courant électrique d'alimentation de l'actionneur électrique. Classiquement, le calculateur centralisé reçoit des informations d'état en provenance du frein et/ou de l'actionneur électromécanique pour réaliser une boucle d'asservissement et ajuster la valeur du courant électrique d'alimentation. Une telle architecture de système de freinage requiert un volume conséquent de liaisons filaires qui relient l'actionneur-ainsi que chacun des capteurs d'état au calculateur centralisé. Dans le cas d'aéronefs équipés d'une pluralité d'actionneurs électromécaniques de freinage, il est nécessaire d'établir une ligne de puissance spécifique entre le calculateur et chaque actionneur électromécanique. Ces liaisons filaires représentent une masse importante.

La demande de brevet FR3044296 décrit une architecture de système de freinage pour aéronef, comportant un frein et un actionneur électromécanique pour appliquer un effort de freinage sur le frein. L'actionneur électromécanique comporte un moteur électrique, un module de puissance pour générer un courant d'alimentation du moteur électrique, et un module de communication numérique. L'architecture de freinage comporte également un contrôleur comprenant une unité d'alimentation destinée à alimenter le module de puissance en lui fournissant une tension d'alimentation ainsi qu'une unité de contrôle reliée à une unité de communication numérique pour produire des signaux numériques de commande du moteur électrique et à les transmettre au premier module de communication numérique. En fonctionnement, le module de communication numérique transmet les signaux numériques de commande au module de puissance de sorte que le module de puissance génère un courant d'alimentation à partir de la tension d'alimentation et des signaux numériques de commande. L'unité de contrôle est reliée à un réseau de communication numérique de l'aéronef et l'unité d'alimentation est reliée à un réseau de distribution de puissance de l'aéronef. Une telle architecture s'appuie sur une infrastructure de communication des signaux numériques de commande qui comprend notamment un réseau de communication, un protocole de gestion du réseau, un protocole de communication au sein du réseau, un ou plusieurs routeurs, un ou plusieurs module(s) de communication numérique. Une défaillance dans l'infrastructure de communication peut provoquer, si elle affecte un élément commun tel que le réseau ou l'un des protocoles, une perte totale de la capacité de freinage de l'aéronef

La demande de brevet EP3632795 A1 décrit une architecture de système de freinage pour aéronef, comportant : un frein comprenant des actionneurs électromécaniques ; une voie de contrôle principale et une voie de contrôle alternative comprenant des composants électriques qui sont au moins partiellement différents et agencées pour mettre en œuvre respectivement un contrôle de freinage principal et un contrôle de freinage alternatif qui sont au moins partiellement différents ; des modules de puissance comprenant des composants électriques qui sont au moins partiellement différents et agencés pour générer, à partir des signaux de commande principaux ou bien des signaux de commande alternatifs, des courant électriques d'alimentation ; une unité de surveillance agencée pour assurer que, en fonctionnement normal, les signaux de commande principaux sont utilisés et que, en cas de panne, les signaux de commande alternatifs sont utilisés pour générer les courants électriques d'alimentation.

### OBJET DE L'INVENTION

L'invention a notamment pour but d'améliorer la fiabilité d'une architecture distribuée de système de freinage électrique.

### RESUME DE L'INVENTION

A cet effet, on prévoit, selon l'invention une architecture de système de freinage de roue d'aéronef, comprenant un frein à friction ; un premier actionneur électromécanique ayant un premier moteur électrique, un premier module de puissance relié à un premier module de communication numérique par un premier module de pilotage; un contrôleur comprenant une unité d'alimentation agencée pour fournir au premier module de puissance une tension d'alimentation (Vc) et une unité de contrôle comprenant une unité de communication numérique pour transmettre un signal numérique de commande au premier module de communication numérique. Le premier module de puissance est agencé pour recevoir le signal numérique de commande et le transmettre au premier module de pilotage pour piloter le premier module de puissance de sorte que le premier module de puissance génère un premier courant nominal d'alimentation à partir de la tension d'alimentation et du signal numérique de commande. Une première liaison filaire de type analogique relie l'unité de contrôle et le premier module de pilotage. L'unité de contrôle est agencée pour envoyer un premier ordre de freinage analogique au premier module de pilotage à l'aide de la première liaison filaire, et le premier module de pilotage est agencé pour piloter le premier module de puissance pour générer un premier courant dégradé d'alimentation à partir de la tension d'alimentation et du premier ordre analogique de freinage et provoquer un freinage de la roue.

On obtient ainsi une architecture de freinage distribuée comportant une liaison dissimilaire de la liaison numérique et ainsi insensible aux problèmes pouvant affecter la liaison numérique.

La répartition du freinage est plus homogène lorsque le frein comprend un deuxième actionneur électromécanique pour appliquer un effort de freinage sur les organes de friction et exercer ainsi un couple de freinage sur la roue. Le deuxième actionneur électromécanique comporte : un deuxième moteur électrique, un deuxième module de puissance pour générer un deuxième courant d'alimentation du deuxième moteur électrique à partir de la tension d'alimentation fournie par l'unité d'alimentation, le deuxième module de puissance étant relié à un deuxième module de communication numérique par un deuxième module de pilotage, le deuxième module de communication numérique étant agencé pour recevoir les signaux numériques de commande et les transmettre au deuxième module de pilotage pour piloter le deuxième module de puissance de sorte que le deuxième module de puissance génère un deuxième courant nominal d'alimentation à partir de la tension d'alimentation et des signaux numériques de commande. Avantageusement, le premier module de communication numérique et le deuxième module de communication numérique sont interconnectés pour former un réseau numérique.

De préférence, l'unité de contrôle est reliée au deuxième module de pilotage par une deuxième liaison filaire de type analogique et est agencée pour envoyer un deuxième ordre de freinage analogique au deuxième module de pilotage à l'aide de la deuxième liaison filaire. Le deuxième module de pilotage est agencé de manière à piloter le deuxième module de puissance pour générer un deuxième courant dégradé d'alimentation à partir de la tension d'alimentation et du deuxième ordre analogique de freinage et provoquer un freinage de la roue.

Avantageusement, la première liaison filaire et/ou la deuxième liaison filaire est une liaison unidirectionnelle.

Il est possible de réaliser une régulation du freinage lorsque l'architecture de freinage comprend des premiers moyens d'estimation d'une première puissance de freinage développée par le premier actionneur électromécanique. Avantageusement, les premiers moyens d'estimation comprennent un premier capteur de mesure du courant consommé par le premier moteur électrique et/ou un premier capteur de déplacement d'un premier organe mobile du premier moteur électrique.

La régulation du freinage demeure possible en cas de défaillance de l'unité de communication numérique ou du module numérique lorsque le premier module de pilotage est agencé pour contrôler la génération du premier courant dégradé en fonction d'une information fournie par les premiers moyens d'estimation.

L'invention concerne également un procédé de freinage mis en œuvre au sein d'une telle architecture par le contrôleur et qui comprend les étapes suivantes :
- transmettre une consigne de freinage à l'unité de contrôle, puis

dans un mode nominal :
   - générer un signal de commande numérique à partir de la consigne de freinage ;
   - transmettre le signal de commande numérique au premier module de pilotage à l'aide de l'unité de communication numérique ;
   - générer à l'aide du premier module de pilotage et à partir du signal numérique de commande, une première commande du premier module de puissance ;
   - générer à l'aide du premier module de puissance un premier courant nominal d'alimentation à partir de la tension d'alimentation et de la première commande ;
   - transmettre au contrôleur à l'aide du premier module de communication numérique un premier signal représentatif d'une première puissance de freinage développée par le premier actionneur électromécanique ;
   - faire engendrer par l'unité de contrôle un signal de commande numérique ajusté à partir du premier signal et de la première valeur nominale ;
   - transférer le signal de commande numérique ajusté au premier module de communication numérique à l'aide de l'unité de communication numérique ;
   - générer un premier courant nominal d'alimentation à l'aide du premier module de pilotage à partir de la tension d'alimentation et du signal de commande numérique ajusté ;
dans un mode dégradé :
   - convertir la consigne de freinage en un ordre de freinage analogique dégradé à l'aide de l'unité de contrôle ;
   - transférer l'ordre de freinage analogique dégradé au premier module de pilotage à l'aide de la première liaison filaire ;
   - générer à l'aide du premier module de pilotage et à partir de l'ordre de freinage analogique dégradé, une première commande dégradée du premier module de puissance ;
   - générer à l'aide du premier module de puissance un premier courant dégradé d'alimentation à partir de la tension d'alimentation et de la première commande dégradée.

Avantageusement, le premier actionneur comprend des premiers moyens d'estimation d'une première puissance de freinage développée par le premier actionneur électromécanique et le premier module de pilotage est agencé pour contrôler la génération du premier courant dégradé en fonction d'une information fournie par les premiers moyens d'estimation, le procédé comprenant les étapes supplémentaires suivantes :
dans le mode dégradé :
- définir à l'aide de la première unité de pilotage, une valeur ajustée du courant dégradé de freinage en fonction de l'information fournie par les premiers moyens d'estimation et de l'ordre de freinage analogique dégradé ;
- générer à l'aide du premier module de puissance un premier courant dégradé de freinage ajusté à la valeur ajustée à partir de la tension d'alimentation.

L'invention concerne également un aéronef pourvu d'une architecture de freinage telle que décrite ci-dessus.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :

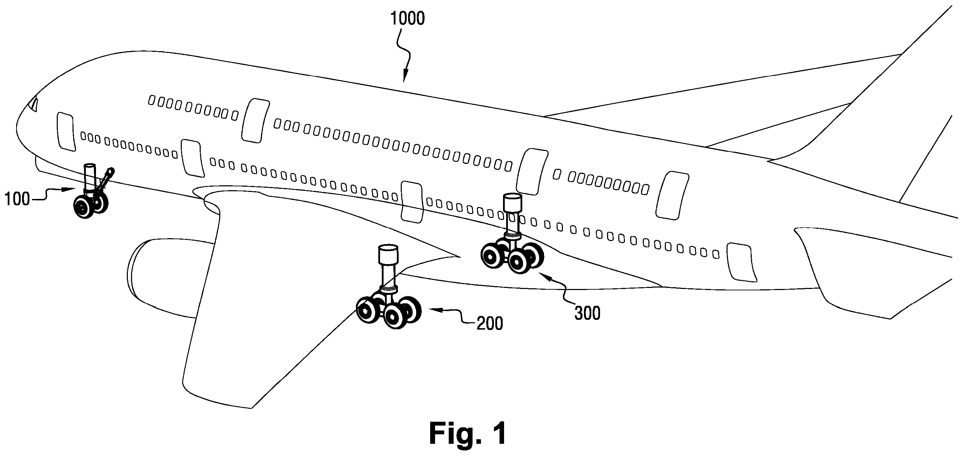

- la figure 1 est une représentation schématique d'un aéronef selon l'invention ;
- la figure 2 est une représentation schématique d'une architecture de freinage selon un premier mode de réalisation de l'invention ;
- la figure 3 est une représentation schématique d'une architecture de freinage selon un deuxième mode de réalisation de l'invention ;
- la figure 4 est une représentation schématique d'une architecture de freinage selon un troisième mode de réalisation de l'invention.

### DESCRIPTION DETAILLEE DE L'INVENTION

L'invention est ici mise en œuvre sur un aéronef 1000 qui comporte une pluralité d'atterrisseurs 100, 200 et 300 portant chacun une pluralité de roues dites « freinées », c'est à dire une pluralité de roues équipées d'un frein pour freiner l'aéronef 1000. La présente description porte sur une unique roue freinée, mais l'invention s'applique bien sûr de la même manière à tout ou partie des roues freinées de l'aéronef.

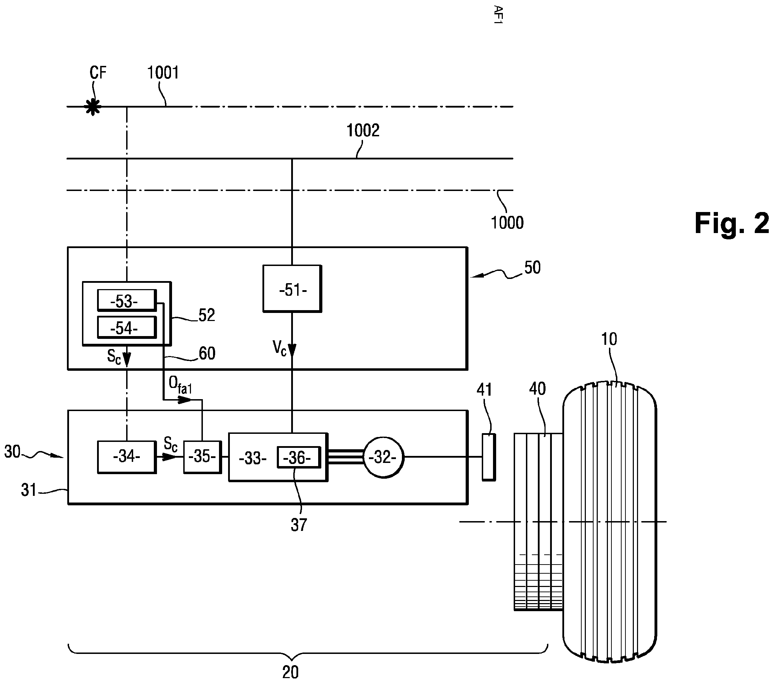

En référence à la figure 2, une architecture de système de freinage selon un premier mode de réalisation de l'invention comporte un frein 20 destiné à freiner une des roues 10 de l'aéronef. Le frein 20 comporte un premier actionneur électromécanique 30 et des organes de friction, en l'occurrence une pile 40 de disques de carbone solidaires de la roue 10. L'actionneur électromécanique 30 est utilisé pour appliquer un effort de presse sur la pile 40 de disques de carbone et exercer ainsi un couple de freinage sur la roue 10. Le premier actionneur électromécanique 30 comporte un premier corps 31 fixé à l'atterrisseur principal 100 et dans lequel sont ici intégrés un premier moteur électrique 32 triphasé, un premier module de puissance 33 et un premier module de communication numérique 34. Le premier module de puissance 33 et le premier module de communication numérique 34 sont reliés par un premier module de pilotage 35. Un premier poussoir 41 est actionné par le premier moteur électrique 32 pour coulisser et appliquer l'effort de presse sur la pile 40 de disques de carbone.

L'architecture de système de freinage selon l'invention comprend également un contrôleur 50 comprenant une unité d'alimentation 51 reliée au premier module de puissance 33 ainsi qu'une unité de commande ou contrôle 52. L'unité de contrôle 52 comporte une unité de traitement 53 et une unité de communication numérique 54 reliée au premier module de communication numérique 34.

L'unité de contrôle 52 est reliée à un réseau de communication numérique 1001 de l'aéronef 1000 et l'unité d'alimentation 51 est reliée à un réseau de distribution de puissance 1002 de l'aéronef 1000, ici un réseau délivrant une tension continue.

L'unité d'alimentation 51 alimente le premier module de puissance 33 en lui fournissant une tension d'alimentation continue Vc. Le premier module de puissance 33 est agencé pour générer un courant d'alimentation alternatif qui circule dans trois phases du premier moteur électrique 32 lorsqu'il convient d'actionner le premier poussoir 41 et donc de freiner la roue 10. Le premier module de puissance 33 comporte à cet effet un premier onduleur 36 comprenant une pluralité de premiers interrupteurs 37 qui sont commandés par le premier module de pilotage 35 de manière à transformer la tension d'alimentation continue en une tension alternative triphasée sous laquelle est généré le premier courant d'alimentation du premier moteur électrique 32.

Le premier module de pilotage 35 comporte un circuit électronique qui est relié au premier module de puissance 33 et qui est agencé pour commander les premiers interrupteurs 37 du premier onduleur 36 en fonction d'un ordre du premier module de communication numérique 34.

Comme visible en figure 2, une première liaison filaire 60 de type analogique relie l'unité de contrôle 52 et le premier module de pilotage 35. Ici, la première liaison filaire 60 est un simple câble de cuivre à deux conducteurs qui transmet de manière unidirectionnelle un signal analogique (ici une tension) depuis l'unité de traitement 53 vers le premier module de pilotage 35. La première unité de pilotage 35 transforme le signal analogique reçu en une configuration spécifique des premiers interrupteurs 37 du premier onduleur 36. Ainsi, l'application d'une tension aux bornes de la première liaison filaire 60 permet de commander un changement d'état discret des premiers interrupteurs 37.

En fonctionnement, lorsque le pilote de l'aéronef 1000 agit sur une commande de frein, il génère une consigne de freinage Cf qui est transmise par le réseau de communication numérique 1001 au contrôleur 50. Dans un mode de fonctionnement nominal, l'unité de traitement 53 génère un signal numérique de commande Sc - à partir de la consigne de freinage Cf - pour commander le premier moteur 32. Le signal numérique de commande Sc est transmis au premier module de communication numérique 34 par l'unité de communication numérique 54. Le premier module de communication numérique 34 transmet le signal numérique de commande Sc au premier module de pilotage 35 qui établit une première commande pour le premier module de puissance 33, ici sous la forme d'une première configuration des premiers interrupteurs 37 du premier onduleur 36 du premier module de puissance 33 qui génère alors un premier courant nominal d'alimentation Iₙ₁ à partir de la tension d'alimentation Vc et du signal numérique de commande Sc. Sous l'effet du premier courant nominal d'alimentation Iₙ₁ appliqué au premier moteur 32, le premier poussoir 41 vient presser la pile 40 de disques qui exercent ainsi un couple de freinage nominal sur la roue 10.

En cas de défaillance dans l'infrastructure de communication, comme par exemple une défaillance matérielle affectant le réseau de communication (routeur, unité de communication numérique 54, premier module de communication numérique 34) ou une défaillance logicielle affectant un protocole de gestion du réseau, ou un protocole de communication, des dispositifs de surveillance de fonctionnement connus en informent le contrôleur 50 qui passe alors dans un mode dégradé de pilotage du freinage.

Dans ce mode dégradé, l'unité de traitement 53 convertit la consigne de freinage Cf en un premier ordre analogique de freinage O_{fa1'} ici une tension à appliquer aux bornes de la liaison filaire 60.

L'unité de traitement 53 transfère le premier ordre analogique de freinage O_{fa1} au premier module de pilotage 35 à l'aide de la première liaison filaire 60. Le premier module de pilotage 35 convertit le premier ordre analogique de freinage O_{fa1} en une première commande dégradée pour le premier module de puissance 33, ici sous la forme d'une configuration des premiers interrupteurs 37 du premier onduleur 36. Le premier module de pilotage transmet la première commande dégradée au premier module de puissance 33 qui génère alors un premier courant dégradé d'alimentation I_{d1}. Sous l'effet du premier courant dégradé d'alimentation I_{d1} appliqué au premier moteur 32, le premier poussoir 41 vient presser la pile 40 de disques qui exercent ainsi un couple de freinage dégradé sur la roue 10.

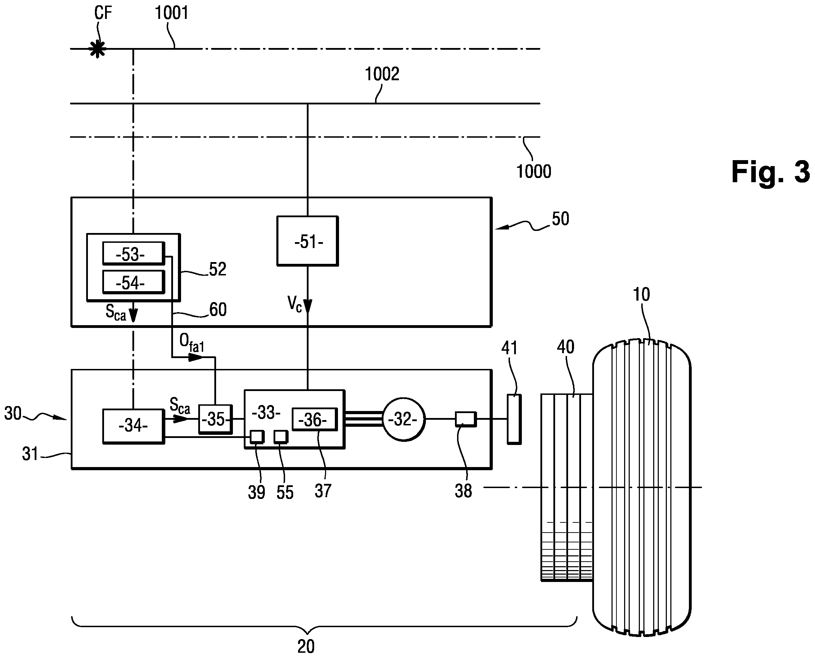

Selon un deuxième mode de réalisation représenté en figure 3, le premier module de puissance 33 du premier actionneur électromécanique 30 comprend un premier capteur 55 du courant consommé par le premier moteur électrique 32 ainsi qu'un un premier capteur de déplacement 38 du premier poussoir 41 reliés au premier module de pilotage 35. Le premier capteur de mesure du courant 55 et le premier capteur de déplacement 38 du premier poussoir 41 sont également reliés au premier module de communication numérique 34.

Selon ce deuxième mode de réalisation, dans le mode normal, le premier module de communication numérique 34 - communique au contrôleur 50 le premier signal provenant du premier capteur de déplacement 38 du premier poussoir 41 ainsi que le deuxième signal provenant du premier capteur de mesure du courant 55. L'unité de traitement 53 utilise le premier signal fourni par le premier capteur de déplacement 38 du premier poussoir 41, le deuxième signal fourni par le premier capteur de mesure du courant 55 et la première valeur nominale du premier courant nominal d'alimentation Iₙ₁ pour générer un premier signal numérique de commande ajusté Sca. L'unité de communication numérique 54 transfère le premier signal numérique de commande nominal ajusté Sca au premier module de communication numérique 34. Le premier module de communication numérique 34 transmet le signal numérique de commande ajusté Sca au premier module de pilotage 35 qui établit une configuration des premiers interrupteurs 37 du premier onduleur 36 du premier module de puissance 33. Le premier module de puissance 33 génère alors un premier courant nominal d'alimentation ajusté Iₙ₁ₐ à partir de la tension d'alimentation Vc et du signal numérique de commande Sc. Sous l'effet du premier courant nominal d'alimentation ajusté Iₙ₁ₐ appliqué au premier moteur 32, le premier poussoir 41 vient presser la pile 40 de disques qui exercent ainsi un couple de freinage nominal ajusté sur la roue 10. Sur la base des informations fournies par le premier capteur de déplacement 38 et par le premier capteur de mesure du courant 55, la valeur du premier courant nominal d'alimentation ajusté Iₙ₁ₐ est mise à jour constamment, créant un asservissement du premier courant nominal d'alimentation ajusté Iₙ₁ₐ sur le déplacement du poussoir 41 et le courant consommé par le moteur 32. Selon ce deuxième mode de réalisation, dans le mode dégradé, la première unité de pilotage 35 définit une nouvelle première valeur ajustée d'un premier courant dégradé d'alimentation ajusté I_{d1a} en fonction du premier signal fourni par le premier capteur de déplacement 38 du premier poussoir 41, du deuxième signal fourni par le premier capteur de mesure du courant 55 et du premier ordre analogique de freinage dégradé O_{fa1} pour établir une configuration des premiers interrupteurs 37 du premier onduleur 36 du premier module de puissance 33. Le premier module de puissance 33 génère alors le premier courant dégradé d'alimentation ajusté I_{d1a} à une intensité égale à la nouvelle première valeur ajustée du premier courant dégradé d'alimentation. Sous l'effet du premier courant dégradé ajusté d'alimentation I_{d1a} appliqué au premier moteur 32, le premier poussoir 41 vient presser la pile 40 de disques qui exercent ainsi un couple de freinage dégradé ajusté sur la roue 10.

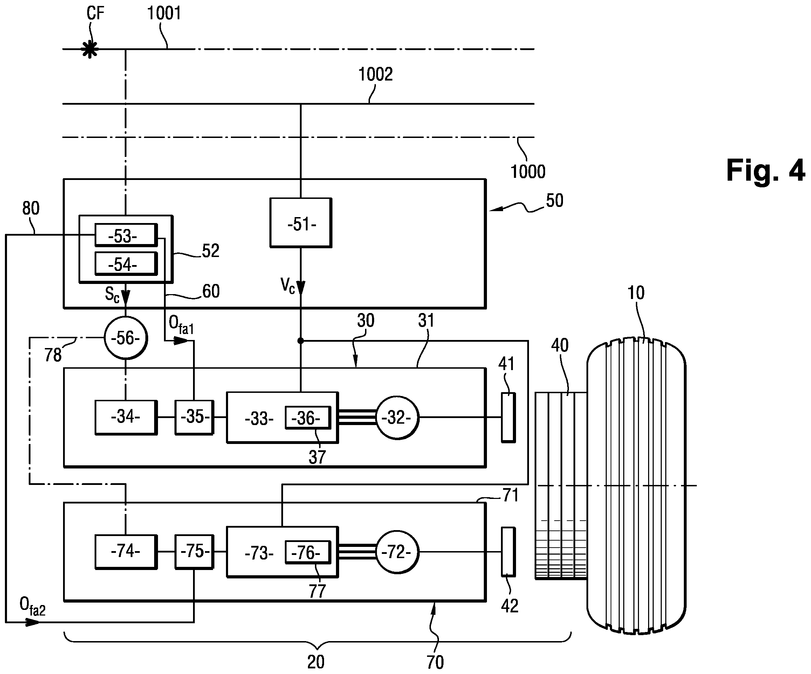

De telles boucles d'asservissement (nominale et dégradée) sont mises en œuvre pour toutes les opérations de freinage. Selon un troisième mode de réalisation représenté en figure 4, le frein 20 comprend un deuxième actionneur électromécanique 70 pour appliquer un effort de presse sur la pile 40 de disques de carbone. Le deuxième actionneur électromécanique 70 comporte un deuxième corps 71 fixé à l'atterrisseur 100 et dans lequel sont intégrés un deuxième moteur électrique 72, un deuxième module de puissance 73 et un deuxième module de communication numérique 74. Le deuxième module de puissance 73 et le deuxième module de communication numérique 74 sont reliés par un deuxième module de pilotage 75. Un deuxième poussoir 42 est actionné par le deuxième moteur électrique 72 pour coulisser et appliquer l'effort de presse sur la pile 40 de disques de carbone. Le deuxième module de puissance 73 est relié à l'unité d'alimentation 51. Le premier module de communication numérique 34 et le deuxième module de communication numérique 74 sont reliés à l'unité de communication numérique 54 par un commutateur réseau 56 (ou « switch ») pour former un réseau numérique 78. On note ici qu'il serait parfaitement possible, à la place du commutateur réseau, d'utiliser un organe d'interconnexion réseau différent, tel qu'un routeur ou un concentrateur (ou « hub »).

L'unité d'alimentation 51 alimente le deuxième module de puissance 73 en lui fournissant la tension d'alimentation continue Vc. Le deuxième module de puissance 73 est agencé pour générer un courant d'alimentation alternatif qui circule dans trois phases du deuxième moteur électrique 72 lorsqu'il convient d'actionner le deuxième poussoir 42 et donc de freiner la roue 10. Le deuxième module de puissance 73 comporte à cet effet un deuxième onduleur 76 comprenant une pluralité de deuxièmes interrupteurs 77 qui sont commandés par le deuxième module de pilotage 75 de manière à transformer la tension d'alimentation continue en une tension alternative triphasée sous laquelle est généré le deuxième courant d'alimentation du deuxième moteur électrique 72.

Le deuxième module de pilotage 75 comporte un circuit électronique qui est relié au deuxième module de puissance 73 et qui est agencé pour commander les deuxièmes interrupteurs 77 du deuxième onduleur 76 en fonction d'un ordre du deuxième module de communication numérique 74.

Comme visible en figure 4, une deuxième liaison filaire 80 de type analogique relie l'unité de contrôle 52 au deuxième module de pilotage 75. Ici, la deuxième liaison filaire 80 est un simple câble de cuivre à deux conducteurs qui transmet de manière unidirectionnelle un signal analogique (ici une tension) depuis l'unité de traitement 53 vers le deuxième module de pilotage 75. Ainsi, l'application d'une tension aux bornes de la deuxième liaison filaire 80 permet de commander un changement d'état discret des deuxièmes interrupteurs 77.

En fonctionnement, lorsque le pilote de l'aéronef agit sur un instrument de commande de frein, il génère une consigne de freinage Cf qui est transmise par le réseau de communication numérique 1001 au contrôleur 50. Dans un mode de fonctionnement normal, l'unité de traitement 53 génère un signal numérique de commande Sc - à partir de la consigne de freinage Cf - pour commander le premier moteur 32 et le deuxième moteur 72. Le signal numérique de commande Sc est transmis par l'unité de communication numérique 54 au commutateur réseau 56 qui le diffuse via le réseau 78 au premier module de communication numérique 34 et au deuxième module de communication numérique 74. Le premier module de communication numérique 34 et le deuxième module de communication numérique 74 transmettent le signal numérique de commande Sc respectivement au premier module de pilotage 35 et au deuxième module de pilotage 75. Le premier module de pilotage 35 et le deuxième module de pilotage 75 établissent respectivement une configuration des premiers interrupteurs 37 du premier onduleur 36 du premier module de puissance 33 et une deuxième configuration des deuxièmes interrupteurs 77 du deuxième onduleurs 76 qui génèrent alors un premier courant nominal d'alimentation Iₙ₁ et un deuxième courant nominal d'alimentation Iₙ₂ à partir de la tension d'alimentation Vc et du signal numérique de commande Sc. Sous l'effet du premier courant nominal d'alimentation Iₙ₁ appliqué au premier moteur 32 et du deuxième courant nominal d'alimentation Iₙ₂ appliqué au deuxième moteur 72, le premier poussoir 41 et le deuxième poussoir 42 viennent presser la pile 40 de disques qui exercent ainsi un couple de freinage nominal sur la roue 10.

Dans le mode dégradé de freinage, l'unité de traitement 53 convertit la consigne de freinage Cf en un premier ordre analogique de freinage O_{fa1} et un deuxième ordre analogique de freinage O_{fa2} . Dans le cas où le premier ordre de freinage O_{af1} et le deuxième ordre de freinage O_{af2} sont identiques, une même tension est appliquée aux bornes de la première liaison filaire 60 et de la deuxième liaison filaire 80. L'unité de traitement 53 transfère le premier ordre analogique de freinage O_{fa1} au premier module de pilotage 35 à l'aide de la première liaison filaire 60 et le deuxième ordre analogique de freinage O_{fa2} au deuxième module de pilotage 75 à l'aide de la deuxième liaison filaire 80. Le premier module de pilotage 35 établit une configuration des premiers interrupteurs 37 du premier onduleur 36 du premier module de puissance 33 qui génère alors un premier courant dégradé d'alimentation I_{d1}. Le deuxième module de pilotage 75 établit une configuration des deuxièmes interrupteurs 77 du deuxième onduleur 76 du deuxième module de puissance 73 qui génère alors un deuxième courant dégradé d'alimentation I_{d2}. Sous l'effet du premier courant dégradé d'alimentation I_{d1} appliqué au premier moteur 32 et du deuxième courant dégradé d'alimentation I_{d2} appliqué au deuxième moteur 72, le premier poussoir 41 et le deuxième poussoir 42 viennent presser la pile 40 de disques et exercent ainsi un couple de freinage dégradé sur la roue 10.

Bien entendu, l'invention n'est pas limitée au mode de réalisation décrit mais englobe toute variante entrant dans le champ de l'invention telle que définie par les revendications.

En particulier,
- bien qu'ici le moteur soit triphasé, l'invention s'applique également à d'autres types de moteurs comme par exemple un moteur monophasé ;
- bien qu'ici la liaison filaire comprenne un câble de cuivre à deux conducteurs, l'invention s'applique également à d'autres façons d'agencer la liaison filaire comme par exemple un câble à un conducteur ou plus de deux conducteurs ;
- bien qu'ici la consigne de freinage soit transmise au contrôleur par le réseau numérique de communication de l'aéronef, l'invention s'applique également à la transmission de la consigne de freinage par d'autres moyens comme par exemple un lien analogique unique, une chaine de liens analogique, une transmission mixte, une transmission par radio, par câble mécanique ou par commande hydraulique ;
- bien qu'ici la liaison filaire soit unidirectionnelle, la liaison peut être bidirectionnelle ;
- bien qu'ici l'architecture comprenne un capteur de mesure du courant et un capteur de déplacement du poussoir, l'invention s'applique également à d'autres moyens d'estimer une première puissance de freinage comme par exemple un capteur de température de la pile de disque, un tachymètre lié à la roue, un capteur de couple de freinage, un capteur de vitesse de l'aéronef ;
- les moyens d'estimation de puissance sont facultatifs ;
- bien qu'ici le premier module de communication numérique et le deuxième module de communication numérique soient interconnectés pour former un réseau numérique, l'invention s'applique également à d'autres types de liaison du premier module de communication numérique et du deuxième module de communication numérique comme par exemple une liaison point par point ;
- bien qu'ici le signal numérique de commande comprenne des instructions identiques pour le premier actionneur et le deuxième actionneur, l'invention s'applique également à un signal numérique comprenant des instructions différentes pour chaque actionneur.

## Revendications

1. Architecture de système de freinage de roue d'aéronef (1000), comportant un frein (20) à friction ; un premier actionneur électromécanique (30) comportant un premier corps (31) dans lequel sont intégrés un premier moteur électrique (32), un premier module de puissance (33) relié à un premier module de communication numérique (34) par un premier module de pilotage (35); l'architecture de freinage comprend également un contrôleur (50) comprenant une unité d'alimentation (51) agencée pour fournir au premier module de puissance (33) une tension d'alimentation (Vc) et une unité de contrôle (52) comprenant une unité de communication numérique (54) pour transmettre un signal numérique de commande (Sc) au premier module de communication numérique (34) ; le premier module de communication numérique (34) étant agencé pour recevoir le signal numérique de commande (Sc) et le transmettre au premier module de pilotage (35) pour piloter le premier module de puissance (33) de sorte que le premier module de puissance (33) génère un premier courant nominal d'alimentation à partir de la tension d'alimentation et du signal numérique de commande (Sc); l'architecture étant **caractérisée en ce que** l'unité de contrôle (52) est reliée au premier module de pilotage (35) par une première liaison filaire (60) de type analogique et est agencée pour envoyer un premier ordre de freinage analogique (O_{fa1}) au premier module de pilotage (35) à l'aide de la première liaison filaire (60), le premier module de pilotage (35) étant agencé de manière à piloter le premier module de puissance (33) pour générer un premier courant dégradé (I_{d1}) d'alimentation à partir de la tension d'alimentation et du premier ordre analogique de freinage (O_{fa1}) et provoquer un freinage de la roue (10).

2. Architecture selon la revendication 1, dans laquelle le frein (20) comprend un deuxième actionneur électromécanique (70) ayant un deuxième moteur électrique (72), un deuxième module de puissance (73) relié à un deuxième module de communication numérique (74) par un deuxième module de pilotage (75), le deuxième module de communication numérique (74) étant agencé pour recevoir le signal numérique de commande (Sc) et les transmettre au deuxième module de pilotage (75) pour piloter le deuxième module de puissance (73) de sorte que le deuxième module de puissance (73) génère un deuxième courant nominal d'alimentation à partir de la tension d'alimentation et des signaux numériques de commande (Sc).

3. Architecture selon la revendication 2, dans laquelle le premier module de communication numérique (34) et le deuxième module de communication numérique (74) sont interconnectés pour former un réseau numérique.

4. Architecture selon la revendication 2 ou 3, dans laquelle une deuxième liaison filaire (80) de type analogique relie l'unité de contrôle (52) et le deuxième module de pilotage (75), l'unité de contrôle (52) étant agencée pour envoyer un deuxième ordre analogique de freinage (O_{fa2}) au deuxième module de pilotage (75) à l'aide de la deuxième liaison filaire (80), le deuxième module de pilotage (75) étant agencé de manière à piloter le deuxième module de puissance (73) pour générer un deuxième courant dégradé (I_{d2}) d'alimentation à partir de la tension d'alimentation et du deuxième ordre analogique de freinage (O_{fa2}) et provoquer un freinage de la roue (10).

5. Architecture selon l'une quelconque des revendications précédentes, dans laquelle la première liaison filaire (60) est une liaison unidirectionnelle.

6. Architecture selon l'une quelconque des revendications précédentes, comprenant des premiers moyens d'estimation d'une première puissance de freinage (55, 38) développée par le premier actionneur électromécanique (30).

7. Architecture selon la revendication 6, dans laquelle les premiers moyens d'estimation (55, 38) comprennent un premier capteur de mesure du courant (55) consommé par le premier moteur électrique (32) et/ou un premier capteur de mesure du déplacement (38) d'un premier organe mobile du premier moteur électrique (32).

8. Architecture selon l'une quelconque des revendications 6 ou 7, dans lequel le premier module de pilotage (35) est agencé pour contrôler la génération du premier courant dégradé (I_{d1}) en fonction d'une information fournie par les premiers moyens d'estimation (38, 55).

9. Procédé de freinage mis en œuvre dans une architecture selon l'une quelconque des revendications précédentes, comprenant les étapes suivantes :
- transmettre une consigne de freinage à l'unité de contrôle (52), puis
dans un mode nominal :
- générer un signal de commande numérique à partir de la consigne de freinage à l'aide du contrôleur (50) et le transférer au premier module de communication numérique (34) via l'unité de communication numérique (54) ;
- générer à l'aide du premier module de puissance (33) un premier courant nominal d'alimentation à partir de la tension d'alimentation et du signal numérique de commande (Sc) ;
- transmettre au contrôleur (50) via le premier module de communication numérique (34) un premier signal représentatif d'une première puissance de freinage développée par le premier actionneur électromécanique (30) ;
- faire engendrer par l'unité de contrôle (52) un signal de commande numérique ajusté (Sca) à partir du premier signal et de la première valeur nominale ;
- transférer le signal de commande numérique ajusté (Sca) au premier module de communication numérique (34) via la première unité de communication numérique (54) ;
- faire engendrer par le premier module de puissance (33) un premier courant nominal d'alimentation ajusté à partir de la tension d'alimentation et du signal de commande numérique ajusté (Sca) ;
dans un mode dégradé :
- convertir la consigne de freinage en un ordre de freinage analogique dégradé à l'aide de l'unité de contrôle (52) ;
- transférer l'ordre de freinage analogique dégradé au premier module de pilotage (35) via la première liaison filaire (60) ;
- générer à l'aide du premier module de pilotage et à partir de l'ordre de freinage analogique dégradé, une première commande dégradée du premier module de puissance ;
- faire générer par le premier module de puissance (33) un premier courant dégradé (I_{d1}) d'alimentation à partir de la tension d'alimentation et de la première commande dégradée.

10. Procédé de freinage selon la revendication 9, le premier actionneur (30) comprenant des premiers moyens d'estimation d'une première puissance de freinage (38, 55) développée par le premier actionneur électromécanique (30) et le premier module de pilotage (35) étant agencé pour contrôler la génération du premier courant dégradé d'alimentation (I_{d1}) en fonction d'une information fournie par les premiers moyens d'estimation (38, 55), le procédé comprenant les étapes supplémentaires suivantes :
dans le mode dégradé :
- définir à l'aide de la première unité de pilotage (35), une valeur ajustée du courant dégradé d'alimentation (I_{d1}) en fonction de l'information fournie par les premiers moyens d'estimation (38, 55) et de l'ordre de freinage analogique dégradé ;
- générer à l'aide du premier module de puissance (33) et, à partir de la tension d'alimentation, un premier courant dégradé d'alimentation ajusté dont la valeur est égale à la valeur ajustée du courant dégradé d'alimentation (I_{d1}) définie par la première unité de pilotage.

11. Aéronef (1000) comprenant une architecture de freinage selon l'une quelconque des revendications 1 à 8.

## Patentansprüche

1. Luftfahrzeugrad-Bremssystemarchitektur (1000), enthaltend eine Reibungsbremse (20); einen ersten elektromechanischen Aktuator (30) mit einem ersten Körper (31), in welchem ein erster Elektromotor (32) sowie ein erstes Leistungsmodul (33), das über ein erstes Ansteuerungsmodul (35) mit einem ersten digitalen Kommunikationsmodul (34) verbunden ist, eingebaut sind; wobei die Bremssystemarchitektur ferner umfasst: einen Controller (50) mit einer Versorgungseinheit (51), die dafür ausgelegt ist, das erste Leistungsmodul (33) mit einer Versorgungsspannung (Vc) zu versorgen, und eine Steuereinheit (52) mit einer digitalen Kommunikationseinheit (54), um ein digitales Steuersignal (Sc) an das erste digitale Kommunikationsmodul (34) zu übertragen; wobei das erste digitale Kommunikationsmodul (34) dafür ausgelegt ist, das digitale Steuersignal (Sc) zu empfangen und an das erste Ansteuerungsmodul (35) zu übertragen, um das erste Leistungsmodul (33) derart anzusteuern, dass das erste Leistungsmodul (33) aus der Versorgungsspannung und aus dem digitalen Steuersignal (Sc) einen ersten nominalen Versorgungsstrom erzeugt; wobei die Architektur **dadurch gekennzeichnet ist, dass** die Steuereinheit (52) über eine erste Drahtverbindung (60) analogen Typs mit dem ersten Ansteuerungsmodul (35) verbunden ist und dafür ausgelegt ist, über die erste Drahtverbindung (60) einen ersten analogen Bremsbefehl (O_{fa1}) an das erste Ansteuerungsmodul (35) zu senden, wobei das erste Ansteuerungsmodul (35) dafür ausgelegt ist, das erste Leistungsmodul (33) derart anzusteuern, dass aus der Versorgungsspannung und aus dem ersten analogen Bremsbefehl (O_{fa1}) ein erster Failsafe-Versorgungsstrom (I_{d1}) erzeugt wird und das Rad (10) gebremst wird.

2. Architektur nach Anspruch 1, wobei die Bremse (20) einen zweiten elektromechanischen Aktuator (70) mit einem zweiten Elektromotor (72) sowie ein zweites Leistungsmodul (73), das durch ein zweites Ansteuerungsmodul (75) mit einem zweiten digitalen Kommunikationsmodul (74) verbunden ist, umfasst, wobei das zweite digitale Kommunikationsmodul (74) dafür ausgelegt ist, das digitale Steuersignal (Sc) zu empfangen und an das zweite Ansteuerungsmodul (75) zu übertragen, um das zweite Leistungsmodul (73) derart anzusteuern, dass das zweite Leistungsmodul (73) aus der Versorgungsspannung und aus den digitalen Steuersignalen (Sc) einen zweiten nominalen Versorgungsstrom erzeugt.

3. Architektur nach Anspruch 2, wobei das erste digitale Kommunikationsmodul (34) und das zweite digitale Kommunikationsmodul (74) zu einem digitalen Netzwerk zusammengeschaltet sind.

4. Architektur nach Anspruch 2 oder 3, wobei eine zweite Drahtverbindung (80) analogen Typs die Steuereinheit (52) mit dem zweiten Ansteuerungsmodul (75) verbindet, wobei die Steuereinheit (52) dafür ausgelegt ist, über die zweite Drahtverbindung (80) einen zweiten analogen Bremsbefehl (O_{fa2}) an das zweite Ansteuerungsmodul (75) zu senden, wobei das zweite Ansteuerungsmodul (75) dafür ausgelegt ist, das zweite Leistungsmodul (73) derart anzusteuern, dass aus der Versorgungsspannung und aus dem zweiten analogen Bremsbefehl (O_{fa2}) ein zweiter Failsafe-Versorgungsstrom (I_{d2}) erzeugt wird und das Rad (10) gebremst wird.

5. Architektur nach einem der vorhergehenden Ansprüche, wobei es sich bei der ersten Drahtverbindung (60) um eine unidirektionale Verbindung handelt.

6. Architektur nach einem der vorhergehenden Ansprüche, umfassend erste Schätzmittel (55, 38) zur Schätzung einer von dem ersten elektromechanischen Aktuator (30) entwickelten, ersten Bremsleistung.

7. Architektur nach Anspruch 6, wobei die ersten Schätzmittel (55, 38) einen ersten Strommesssensor (55) zur Messung des von dem ersten Elektromotor (32) verbrauchten Stroms und/oder einen ersten Wegmesssensor (38) zur Messung des Verfahrwegs eines ersten beweglichen Organs des ersten Elektromotors (32) umfassen.

8. Architektur nach einem der Ansprüche 6 oder 7, wobei das erste Ansteuerungsmodul (35) dafür ausgelegt ist, basierend auf einer von den ersten Schätzmitteln (38, 55) bereitgestellten Information die Erzeugung des ersten Failsafe-Stroms (I_{d1}) anzusteuern.

9. Bremsverfahren, welches in einer Architektur nach einem der vorhergehenden Ansprüche ausgeführt wird, umfassend die Schritte, dass:
- ein Bremssollwert an die Steuereinheit (52) übertragen wird, und anschließend
in einem Nennmodus:
- mithilfe des Controllers (50) aus dem Bremssollwert ein digitales Steuersignal erzeugt wird und über die digitale Kommunikationseinheit (54) an das erste digitale Kommunikationsmodul (34) übertragen wird;
- mithilfe des ersten Leistungsmoduls (33) aus der Versorgungsspannung und aus dem digitalen Steuersignal (Sc) ein erster nominaler Versorgungsstrom erzeugt wird;
- ein erstes Signal, das eine von dem ersten elektromechanischen Aktuator (30) entwickelte erste Bremsleistung darstellt, über das erste digitale Kommunikationsmodul (34) an den Controller (50) übertragen wird;
- die Steuereinheit (52) dazu veranlasst wird, ein angepasstes digitales Steuersignal (Sca) aus dem ersten Signal und aus dem ersten Nominalwert zu erzeugen;
- das angepasste digitale Steuersignal (Sca) über die erste digitale Kommunikationseinheit (54) an das erste digitale Kommunikationsmodul (34) übertragen wird;
- das erste Leistungsmodul (33) dazu veranlasst wird, aus der Versorgungsspannung und aus dem angepassten digitalen Steuersignal (Sca) einen ersten angepassten nominalen Versorgungsstrom zu erzeugen;
in einem Failsafe-Modus:
- der Bremssollwert mithilfe der Steuereinheit (52) in einen analogen Failsafe-Bremsbefehl umgewandelt wird;
- der analoge Failsafe-Bremsbefehl über die erste Drahtverbindung (60) an das erste Ansteuerungsmodul (35) übertragen wird;
- mithilfe des ersten Ansteuerungsmoduls und aus dem analogen Failsafe-Bremsbefehl eine erste Failsafe-Steueranweisung für das erste Leistungsmodul erzeugt wird;
- das erste Leistungsmodul (33) dazu veranlasst wird, aus der Versorgungsspannung und aus der ersten Failsafe-Steueranweisung einen ersten Failsafe-Versorgungsstrom (I_{d1}) zu erzeugen;

10. Bremsverfahren nach Anspruch 9, wobei der erste Aktuator (30) erste Schätzmitteln (38, 55) zur Schätzung einer von dem ersten elektromechanischen Aktuator (30) entwickelten, ersten Bremsleistung umfasst, und wobei das erste Ansteuerungsmodul (35) dafür ausgelegt ist, basierend auf einer von den ersten Schätzmitteln (38, 55) bereitgestellten Information die Erzeugung des ersten Failsafe-Versorgungsstroms (I_{d1}) anzusteuern, wobei das Verfahren die zusätzlichen Schritte umfasst, dass:
in dem Failsafe-Modus:
- mithilfe der ersten Ansteuerungseinheit (35) basierend auf der von den ersten Schätzmitteln (38, 55) bereitgestellten Information und auf dem analogen Failsafe-Bremsbefehl ein angepasster Wert des Failsafe-Versorgungsstroms (I_{d1}) definiert wird;
- mithilfe des ersten Leistungsmoduls (33) und aus der Versorgungsspannung ein erster angepasster Failsafe-Versorgungsstrom erzeugt wird, dessen Wert dem von der ersten Ansteuerungseinheit definierten, angepassten Wert des Failsafe-Versorgungsstroms (I_{d1}) entspricht.

11. Luftfahrzeug (1000) umfassend eine Bremssystemarchitektur nach einem der Ansprüche 1 bis 8.

## Claims

1. A wheel-braking system architecture for an aircraft (1000), the architecture comprising a friction brake (20); a first electromechanical actuator (30) comprising a first body (31) incorporating a first electric motor (32) and a first power module (33) connected to a first digital communication module (34) by a first driver module (35); the braking architecture also comprising a controller (50) comprising both a power supply unit (51) arranged to supply a power supply voltage (Vc) to the first power module (33), and also a control unit (52) including a digital communication unit (54) for transmitting a digital control signal (Sc) to the first digital communication module (34); the first digital communication module (34) being arranged to receive the digital control signal (Sc) and to transmit it to the first driver module (35) to drive the first power module (33) in such a manner that the first power module (33) generates a first nominal power supply current based on the digital control signal (Sc) and taken from the power supply voltage; the architecture being **characterized in that** the control unit (52) is connected to the first driver module (35) by a first wired connection (60) of analog type and is arranged to send a first analog braking order (O_{fa1}) to the first driver module (35) by means of the first wired connection (60), the first driver module (35) being arranged in such a manner as to drive the first power module (33) to generate a first degraded power supply current (I_{d1}) based on the first analog braking order (O_{fa1}) and taken from the power supply voltage, thereby causing the wheel (10) to be braked.

2. An architecture according to claim 1, wherein the brake (20) includes a second electromechanical actuator (70) having a second electric motor (72) and a second power module (73) connected to a second digital communication module (74) by a second driver module (75), the second digital communication module (74) being arranged to receive the digital control signal (Sc) and to transmit them to the second driver module (75) in order to drive the second power module (73) in such a manner that the second power module (73) generates a second nominal power supply current based on the digital control signals (Sc) and taken from the power supply voltage.

3. An architecture according to claim 2, wherein the first and second digital communication modules (34, 74) are interconnected to form a digital network.

4. An architecture according to claim 2 or claim 3, wherein the second wired connection (80) of analog type connects together the control unit (52) and the second driver module (75), the control unit (52) being arranged to send a second analog braking order (O_{af2}) to the second driver module (75) by means of the second wired connection (80), the second driver module (75) being arranged in such a manner as to drive the second power module (73) to generate a second degraded power supply current (I_{d2}) based on the second analog braking order (O_{fa2}) and taken from the power supply voltage, thereby causing the wheel (10) to be braked.

5. An architecture according to any preceding claim, wherein the first wired connection (60) is a unidirectional connection.

6. An architecture according to any preceding claim, including first estimator means for estimating a first braking power (55, 38) developed by the first electromechanical actuator (30).

7. An architecture according to claim 6, wherein the first estimator means (55, 38) comprise a first current sensor (55) for measuring the current consumed by the first electric motor (32) and/or a first movement sensor (38) for measuring movement of a first movable member of the first electric motor (32).

8. An architecture according to claim 6 or claim 7, wherein the first driver module (35) is arranged to control the generation of the first degraded current (I_{d1}) as a function of information delivered by the first estimator means (38, 55).

9. A braking method performed by an architecture according to any preceding claim, the method comprising the following steps:
· transmitting a braking setpoint to the control unit (52), and then:
in a nominal mode:
· generating a digital control signal from the braking setpoint by means of the controller (50), and transferring it to the first digital communication module (34) via the digital communication unit (54);
· using the first power module (33) to generate a first nominal power supply current based on the digital control signal (Sc) and taken from the power supply voltage;
· transmitting a first braking-power signal to the controller (50) via the first digital communication module (34), the first braking-power signal being representative of a first braking power developed by the first electromechanical actuator (30);
· causing the control unit (52) to generate an adjusted digital control signal (Sca) based on the first braking-power signal and on the first nominal value;
· transferring the adjusted digital control signal (Sca) to the first digital communication module (34) via the first digital communication unit (54); and
· causing the first power module (33) to generate a first adjusted nominal power supply current based on the adjusted digital control signal (Sca) and taken from the power supply voltage; and
in a degraded mode:
· converting the braking setpoint into a degraded analog braking order by means of the control unit (52);
· transferring the degraded analog braking order to the first driver module (35) via the first wired connection (60);
· using the first driver module to generate a first degraded command for the first power module based on the degraded analog braking order; and
· causing the first power module (33) to generate a first degraded power supply current (I_{d1}) based on the first degraded command and taken from the power supply voltage.

10. A braking method according to claim 9, the first actuator (30) including first estimator means (38, 55) for estimating a first braking power developed by the first electromechanical actuator (30), and the first driver module (35) being arranged to control the generation of the first degraded power supply current (I_{d1}) as a function of information delivered by the first estimator means (38, 55), the method including the following additional steps:
in the degraded mode:
· using the first driver unit (35) to define an adjusted value for the degraded power supply current (I_{d1}) as a function of the information delivered by the first estimator means (38, 55) and of the degraded analog braking order; and
· using the first power module (33) to generate a first adjusted degraded power supply current of value equal to the adjusted value for the degraded power supply current (I_{d1}) as defined by the first driver unit and taken from the power supply voltage.

11. An aircraft (1000) including a braking architecture according to any one of claims 1 to 8.
